Europäisches Patentamt

European Patent Office

Office européen des brevets

(19)

(11) Veröffentlichungsnummer : **0 115 277**
**B1**

(12) **EUROPÄISCHE PATENTSCHRIFT**

(45) Veröffentlichungstag der Patentschrift :
11.01.89

(51) Int. Cl.⁴ : **B 27 B  5/20**, B 23 D  47/02,
B 27 G  19/02

(21) Anmeldenummer : **84100205.8**

(22) Anmeldetag : **11.01.84**

(54) **Sägetisch.**

(30) Priorität : **26.01.83 DE 3302482**

(43) Veröffentlichungstag der Anmeldung :
**08.08.84 Patentblatt 84/32**

(45) Bekanntmachung des Hinweises auf die Patenterteilung : **11.01.89 Patentblatt 89/02**

(84) Benannte Vertragsstaaten :
**AT CH FR GB IT LI SE**

(56) Entgegenhaltungen :
**DE-A- 3 248 627**
**US-A- 2 008 673**
**US-A- 3 356 111**
**US-A- 4 265 283**
**US-A- 4 292 870**
**US-A- 4 350 193**
**US-E-  30 689**
**OFFICIAL GAZETTE OF THE UNITED STATES**
**PATENT OFFICE, Band 163, 14. Februar 1911, Seite**
**364 & US-A-984237 (E.J. OSBURN Jr)**

(73) Patentinhaber : **FESTO-Maschinenfabrik Gottlieb
Stoll
Ulmer Strasse 48
D-7300 Esslingen (DE)**

(72) Erfinder : **Maier, Peter, Dipl.-Ing.
Gerokstrasse 1
D-7311 Neidlingen (DE)**
Erfinder : **Siegel, Albert
Scholderplatz 21
D-7315 Weilheim (DE)**

(74) Vertreter : **Magenbauer, Rudolf, Dipl.-Ing. et al
Patentanwälte Dipl.-Ing. Rudolf Magenbauer Dipl.-
Phys. Dr. Otto Reimold Hölderlinweg 58
D-7300 Esslingen (DE)**

EP 0 115 277 B1

**Beschreibung**

Die Erfindung betrifft einen Sägetisch mit einem aus Profilelementen aufgebauten Tischgestell und einer daran festlegbaren Grundplatte, in der ein zum Durchgriff eines Sägeblattes einer an der Grundplatte anordenbaren Säge geeigneter Spalt ausgenommen ist, und mit an der Unterseite der Grundplatte vorgesehenen Einrichtungen zur Befestigung und/oder Führung der Säge.

Ein derartiger Sägetisch ist in der US-A 4 265 283 beschrieben. Er enthält einen auf Rollen gelagerten Grundrahmen, an dem vertikal hochragende Seitenteile befestigt sind, deren Oberseiten von deckelartigen Profilteilen verschlossen sind. Der Zwischenraum zwischen den Profilteilen wird von einer drehbar gelagerten Grundplatte überspannt, die seitlich mittels U-förmiger Profilteile versteift ist. An der Unterseite der Grundplatte sind Befestigungs- und/oder Führungseinrichtungen zur lösbaren Halterung einer Säge vorgesehen, deren Sägeblatt in montiertem Zustand durch einen Schlitz der Grundplatte hindurch über die Tischoberfläche hinausragt. Die Bearbeitung eines Werkstückes erfolgt durch Auflage desselben auf der Tischoberseite und anschließendes Verschieben bei gleichzeitigem Werkstückeingriff des hervorragenden Sägeblattabschnittes. Nachteilig bei diesem Sägetisch ist der aufwendige Aufbau, der bei der Montage eine Vielzahl von Schraub- und Schweißvorgängen erfordert. Um die Grundplatte an den seitlichen Profilelementen zu befestigen, müssen mehrere exakt miteinander fluchtende Bohrungen vorgesehen werden, in die Anschlag- bzw. Drehstifte einzusetzen sind. Darüberhinaus müssen Anschlaglaschen für die Grundplatte angeschweißt werden, deren exakte Ausrichtung beträchtlichen Zeitaufwand erfordert. Darüber hinaus ist ein Auswechseln der Grundplatte infolge der Schwenklagerung praktisch nicht möglich, so daß die jeweilige Maschine unmittelbar am Tischgestell montiert werden muß, wobei sich die durch die Schwenklagerung hervorgerufene Instabilität der Grundplatte nachteilig auswirkt. Darüber hinaus gestaltet sich ein Umbau des Sägetisches bezüglich eines anderen Sägentypes relativ aufwendig, da zunächst die angebrachte Säge entfernt und hernach die neue Säge montiert werden muß. Hinzu kommt, daß die beim bekannten Sägetisch verwendeten Profilteile sämtliche Spezialanfertigungen sind, deren Längenabmessungen nicht beliebig variierbar sind, da die Größenverhältnisse durch die abgekanteten Flankenteile und die vorgefertigten Bohrungen festgelegt sind.

Es ist daher die Aufgabe der Erfindung einen besonders robusten, mit einer Vielzahl von verschiedenen Sägetypen zu bestückenden Sägetisch zu schaffen, der weitgehend aus standartisierten Teilen aufgebaut ist und sich deshalb sowohl kostengünstig herstellen als auch in seiner Größe den verschiedensten Werkstücken anpassen läßt, und der über dies zerlegbar und auch sonst besonders bedienungsfreundlich ist.

Diese Aufgabe wird dadurch gelöst, daß wenigstens ein Profilelement unter Bildung einer unterhalb der Tischebene versenkt liegenden, von Längsrinnen flankierten Rundführung abgestuft ist und ein Seitenrand der Grundplatte mit einer als Form-Negativ der Rundführung gestalteten Einbuchtung versehen ist, mit der die Grundplatte auf die Rundführung auswechselbar aufsetzbar ist, wobei sie in ihrer Arretierungsstellung mit dem Rücken eines oder mehrerer der Profilelemente fluchtet und eine gemeinsame Tischebene bildet.

Bei dieser Anordnung ist von Vorteil, daß als Profilelemente Normteile verwendet werden können, die sich für verschiedene Sägetischgrößen verwenden lassen, da ihre Länge beliebig variierbar ist. Die Herstellung kann vorzugsweise im Rahmen eines Strangpressverfahrens erfolgen, im Anschluß daran die Elemente problemlos auf die gewünschte Länge ablängbar sind. Dadurch ist eine kostengünstige Großserienherstellung möglich. Desweiteren ist die Grundplatte auswechselbar bzw. abnehmbar am Tischgestell festlegbar, so daß die Montage der jeweiligen Säge im abgenommenen Zustand gut zugänglich erfolgen kann. Außerdem gestaltet sich der Sägenwechsel wesentlich einfacher und schneller, da lediglich Grundplatten mit vormontierter Säge auszuwechseln sind. Dies hat überdies den Vorteil, daß voreingestellte, an eventuellen Werkstückanschlägen ausgerichtete Montagepositionen der jeweiligen Säge nicht verloren gehen. Die Oberflächenstruktur der Profilelemente bildet überdies eine herstellungstechnisch besonders einfache Halterungseinrichtung für diverse Verschiebeteile des Sägetischs. Es ist problemlos möglich, weitere Zusatzteile wie Führungsschlitten, Sägeschutzhalter, Anschläge, Werkstückhalter oder dergleichen anzubringen. Bei alledem erhält man in der Arretierungsstellung der Grundplatte eine mit dem Profilelementen exakt fluchtende Tischebene, wobei Ungenauigkeiten praktisch ausgeschlossen sind, dadurch Kontakt des Form-Negativs mit der Rundführung gleichzeitig eine Lagezentrierung erfolgt.

Vorteilhafte Weiterbildungen der Erfindung sind in den Unteransprüchen aufgeführt.

Die Weiterbildung nach Anspruch 4 hat den Vorteil einer problemlosen Anpassung des Spaltes an die Größe des jeweils verwendeten Sägeblattes.

Bei der Weiterbildung nach Anspruch 7 sind die Befestigungseinrichtungen in Gestalt von Pratzen ausgebildet, die es erlauben, die Säge fest und im Bedarfsfalle abnehmbar bzw. auswechselbar an der Grundplatte anzuordnen.

Bei der Weiterbildung nach Anspruch 8 ist die Säge an einem Schlitten befestigbar, der an der Führungseinrichtung an der Unterseite der Grundplatte verschiebbar geführt angeordnet ist. Dadurch läßt sich die Säge einfach verstellen und es ist auch möglich, bei einem Sägevorgang das jeweilige Werkstück am Tischgestell festzuklemmen und den Sägeschnitt durch ein Verschieben des Schlittens und der daran mitbewegbar angeordneten Säge hervorzurufen.

Die Erfindung wird nachfolgend anhand der beiliegenden Zeichnung näher erläutert. In dieser zeigen :

Figur 1 Die perspektivische Ansicht eines Sägetisches gemäß der Erfindung,

Figur 2 eine Draufsicht auf die Grundplatte des Sägetisches,

Figur 3 eine Seitenansicht der Grundplatte im Schnitt entlang der Linie III-III aus Figur 2, wobei die Grundplatte in Arretierungsstellung auf dem Tischgestell gezeigt und ein die Tragplatte der Säge haltender Schlitten eingezeichnet ist,

Figur 4 eine Draufsicht auf eine Abdeckplatte,

Figur 5 einen Schnitt durch die Abdeckplatte entlang der Linie V-V aus Figur 4,

Fig. 6 einen Schnitt durch die Abdeckplatte entlang der Linie VI-VI von Fig. 4 ;

Fig. 7 eine Draufsicht auf den als Sägehalterung dienenden Schlitten ;

Fig. 8 eine Seitenansicht des Schlittens mit Blick in Richtung VIII von Fig. 7 ;

Fig. 9 einen Schnitt durch den Schlitten entlang der Linie IX-IX von Fig. 7 ;

Fig. 10 die Schnittansicht eines Lagerbocks mit einer darin eingesetzten Zugstange des Schlittens im Schnitt entlang der Linie X-X von Fig.11 ;

Fig. 11 eine Stirnansicht des Lagerbocks allein mit Blick in Richtung XI von Fig. 10 ;

Fig. 12 die schematische Seitenansicht einer Einrichtung zur Schnittiefenverstellung ;

Fig. 13 eine Einzelheit der Einrichtung gemäß Fig. 12 im Längsschnitt ;

Fig. 14 die Vorderansicht eines Sägeschutzhalters ;

Fig. 15 eine Seitenansicht des Sägeschutzhalters mit Blick in Richtung XV von Fig. 14 ;

Fig. 16 eine Draufsicht auf den Sägeschutzhalter in Richtung XVI von Fig. 15.

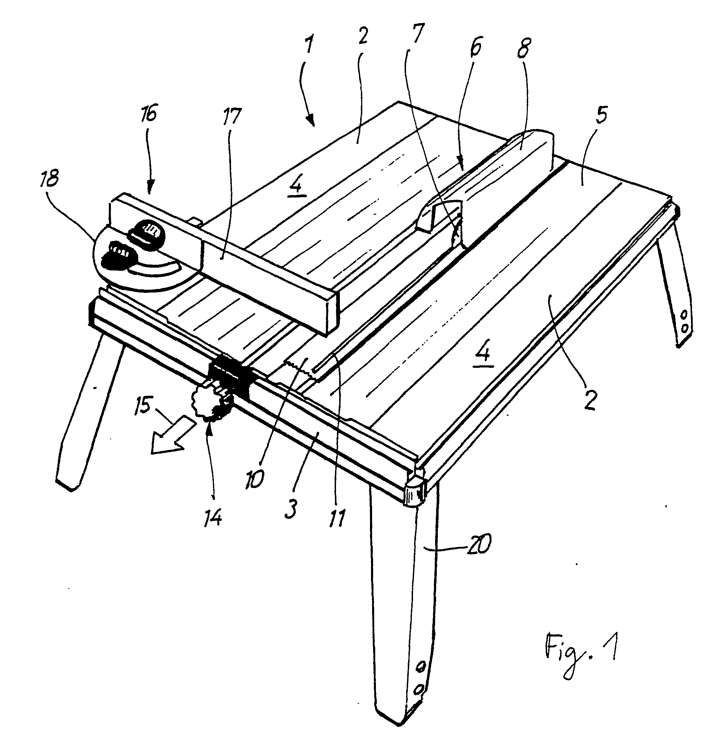

Bezugnehmend zunächst auf Fig. 1, ist ein insgesamt mit 1 bezeichneter Sägetisch dargestellt, der ein aus Profilelementen aufgebautes Tischgestell aufweist. Man erkennt im einzelnen zwei einander gegenüberliegende Längsprofile 2, die mit Querprofilen 3 verbunden sind. Der Rücken 4 der Längsprofile 2 ist wesentlich breiter als der der Querprofile 3. Wie noch im einzelnen dargelegt, bilden die Profilrücken 4 mit einer zwischen den Längsprofilen 2 gehaltenen Grundplatte 5 eine gemeinsame Tischebene. Die Grundplatte 5 dient als Halterung und Führung für eine motorgetriebene Säge 6, insbesondere eine Kreissäge. Diese ragt in dem dargestellten Ausführungsbeispiel mit ihrem Sägeblatt 7 nach oben aus der Grundplatte 5 heraus und ist mit einer Schutzhaube 8 abgedeckt. Zum Durchgriff des Sägeblatts 7 durch die Grundplatte 5 ist in dieser ein Spalt 9 ausgenommen, der in Fig. 1 durch eine Abdeckplatte 10 zum Teil verschlossen ist. In der Abdeckplatte 10 ist ein Schlitz 11 vorgesehen, der mit dem darunter befindlichen Spalt 9 fluchtet und einen Durchgriff des Sägeblatts 7 ermöglicht. Die Säge 6 kann vermittels eines noch näher beschriebenen, unterhalb der Grundplatte 5 angeordneten Schlittens 12 in Längsrichtung des Schlitzes 11 verschoben werden ; hierzu dient eine Zugstange 13, deren Ende mit einem Stellknopf 14 bestückt ist und mit diesem in Richtung des Pfeils 15 aus dem Sägetisch 1 herausgezogen werden kann.

Exemplarisch auch für andere Arbeitshilfsmittel, ist in Fig. 1 ein Anschlag 16 dargestellt, der eine verschwenkbare Führungsschiene 17 aufweist und mit einem Gelenkkörper 18 an die Außenseite eines Längsprofils 2 montiert ist. Der Anschlag 16 ist dort in Längsrichtung des Sägetischs 1 verschiebbar gehalten. Zusätzlich oder anstelle des Anschlags 16 können an den Profilelementen 2 ; 3 auch andere Arbeitshilfsmittel, wie z. B. Werkstückhalter, Sägeschutzhalter u. ä. angeordnet sein. Fig. 1 zeigt schließlich eine bevorzugte Anordnung der Tischbeine 20 des Sägetischs 1, bei der diese von den Profilelementen 2 ; 3 schräg nach unten abstehen, so daß die Standfläche der Tischbeine 20 größer ist als der von den Längsprofilen 2 und den Querprofilen 3 gebildete Profilrahmen. In einer bevorzugten Anordnung sind die Tischbeine 20 derart ausgestellt, daß sie in vertikaler Projektion auf einer Winkelhalbierenden zwischen je einem Längsprofil 2 und einem Querprofil 3 zu liegen kommen. Diese Anordnung zeichnet sich durch ein besonders hohes Maß an Stabilität aus.

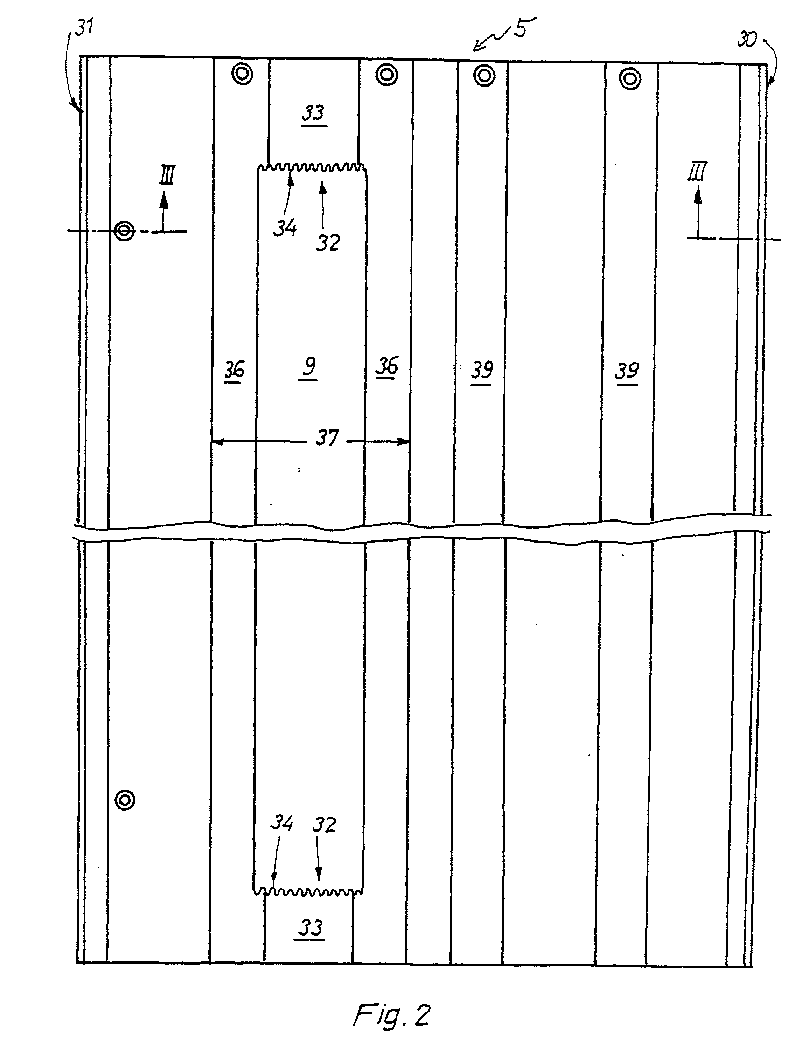

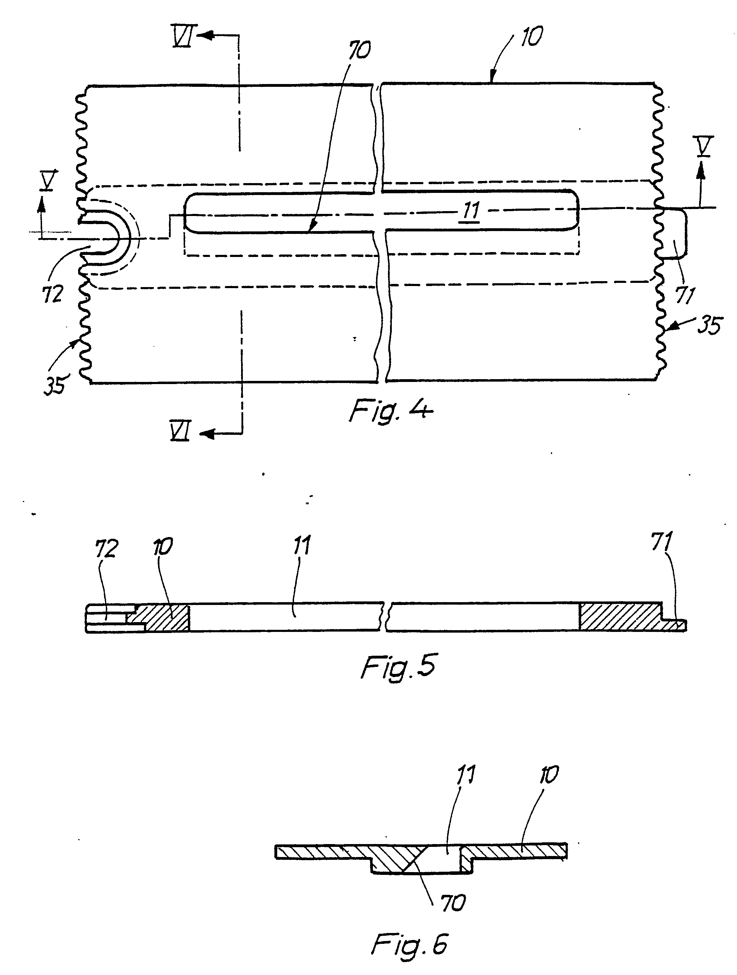

Bezugnehmend nunmehr auf Fig. 2, ist die Grundplatte 5 des Sägetischs 1 in Draufsicht dargestellt. Die Grundplatte 5 hat eine rechteckige Form. Sie wird mit den Seitenrändern 30, 31 an den Längsprofilen 2 gehalten. In einem mittelnahen Bereich der Grundplatte 5 ist ein für den Durchgriff des Sägeblatts 7 geeigneter Spalt 9 ausgenommen, der sich über annähernd die volle Länge der Grundplatte 5 erstreckt. An seinen Querseiten 32 wird der Spalt 9 durch Stege 33 begrenzt, die eine Verzahnung 34 tragen. Die Verzahnung 34 erstreckt sich dabei über die volle Breite der Querseiten 32. Sie wird in dem dargestellten Ausführungsbeispiel durch eine gewellte Kante mit annähernd kreisbogenförmigen Rundungen gebildet. Mit dieser Verzahnung 34 kommt eine an der Abdeckplatte 10 ausgeformte Gegenverzahnung 35 zum Eingriff, die in Fig. 4 dargestellt ist. Vermittels der Abdeckplatte 10 wird der Spalt 9 in der Grundplatte 5 überdeckt und teilweise verschlossen. Die Abdeckplatte 10 kommt dazu auf den Abschnitten 36 der Grundplatte beidseits des Spalts 9 zu liegen. Die Breite der Abdeckplatte 10 ist so gewählt, daß sie in sämtlichen möglichen Raststellungen mit der Verzahnung 34 den Spalt 9 überspannt. Durch das Zusammenwirken von Verzahnung 34 und Gegenverzahnung 35 wird eine stufenweise Verstellmöglichkeit der Abdeckplatte 10 über dem Spalt 9 geschaffen. Der Verstellbereich wird dabei durch Stufen 37 begrenzt, mit denen die Abschnitte 36 gegenüber der Tischebene 38 abfallen.

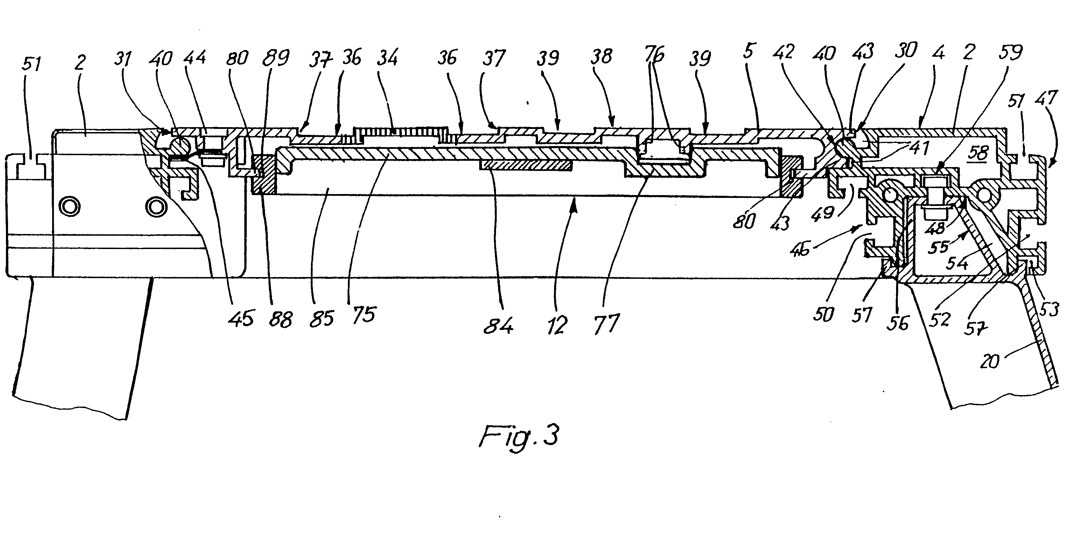

Die entsprechende Oberflächenstruktur der Grundplatte 5 wird anhand von Fig. 3 deutlich. Auf Grund der gewählten Schnittlinie erscheint darin die Grundplatte 5 mit Ausnahme der Verzahnung 34 im Schnitt. Man erkennt, daß die Abschnitte 36 beidseits des Spalts 9 gegenüber der Tischebene 38 versenkt liegen. Überdies erscheinen an der Oberseite der Grundplatte 5 weitere Einsenkungen 39, die zur Führung der Schutzhaube 8 gemäß Fig. 1 bzw. anderer geeigneter Arbeitshilfsmittel dienen können. Die Grundplatte 5 ist mit den Seitenrändern 30, 31 auf zwei Längsprofilen 2 gelagert. Die Längsprofile 2 sind hierzu unter Bildung einer unter der Tischebene 38 versenkt liegenden Rundführung 40 abgestuft. Die Rundführung 40 wird beidseits von Längsrinnen 41 flankiert. Ein Seitenrand 30 der Grundplatte 5 ist über seine volle Länge mit einer Einbuchtung 42 versehen, der als Form-Negativ der Rundführung 40 gestaltet ist. Die Einbuchtung 42 ist zur Seite hin offen, so daß sich die Grundplatte 5 mit der Einbuchtung 42 auf die Rundführung 40 aufsetzen läßt. Die Einbuchtung 42 wird beidseits von Laschen 43 begrenzt, die dem Seitenrand 30 der Grundplatte 5 die Form eines seitlich geöffneten U verleihen. In der in Fig. 3 dargestellten Arretierungsstellung der Grundplatte 5 kommen die Laschen 43 in den Längsrinnen 41 des Längsprofils 2 zu liegen. Diese Endstellung wird in einer Schwenkbewegung der Grundplatte 5 um die Rundführung 40 erreicht. Die Grundplatte 5 wird zunächst in einem Winkel gegen die von den Profilelementen 2 ; 3 aufgespannte Tischebene 38 geneigt, mit der Einbuchtung 42 auf die Rundführung 40 aufgesetzt, wozu die Längsrinnen 41 das erforderliche Spiel lassen. Sodann wird die Grundplatte 5 in einer Schwenkbewegung um die Rundführung 40 abgesenkt, bis sie mit ihrem gegenüberliegenden Seitenrand 31 auf einer entsprechenden Rundführung 40 des anderen Längsprofils 2 zur Anlage kommt.

In dieser Endstellung wird die Grundplatte 5 vermittels einer Exzenterschraube 44 arretiert. Die Exzenterschraube 44 weist ein Exzenterglied in Gestalt eines Spannblechs 45 auf, das durch Drehen der Exzenterschraube 44 in der Längsrinne 41 unterhalb der Rundführung 40 zum Eingriff kommt. Um die Grundplatte 5 wieder zu lösen, ist es nur erforderlich, die Exzenterschraube um 90 Grad zu verdrehen. Statt einer Exzenterschraube 44 kann auch ein anderes, geeignetes Klemmglied Verwendung finden, das in die Profilstruktur des Längsprofils 2 eingreift. Gemäß einer bevorzugten Ausführungsform sind die Längsprofile 2 auf beiden Seiten der Grundplatte 5 identisch geformt und spiegelsymmetrisch montiert. Abgesehen von herstellungstechnischen Vereinfachungen, ist es hierdurch möglich, die Grundplatte 5 auch um 180 Grad gedreht an das Tischgestell zu montieren. Man erkennt weiterhin, daß die Rundführungen 40 der Längsprofile 2 gerade um einen Betrag unterhalb der Tischebene 38 versenkt angeordnet sind, der der Dicke der Grundplatte 5 entspricht. Die Rücken 4 der Längsprofile 2 bilden so mit der Grundplatte 5 eine gemeinsame Tischebene 38, was eine besonders bedienungsfreundliche Anordnung darstellt. In einer bevorzugten Ausführungsform weist das Längsprofil 2 außer der erwähnten Rundführung 40 an seiner Innenkante 46, Außenseite 47 und Unterseite 48 Nuten, insbesondere T-Nuten oder Schwalbenschwanz-Nuten, für verschiebbar einzusetzende Werkstückhalter, Anschläge und andere Arbeitshilfsmittel auf. Im einzelnen ist an der Innenseite 46 unterhalb der Rundführung 40 eine nach unten offene erste T-Nut 49 und relativ zu dieser nach unten und außen versetzt eine weitere, seitlich nach innen offene zweite T-Nut 50 vorgesehen. An der Außenseite des Längsprofils 2 ist eine gegenüber dem Profilrücken 4 versenkte, nach oben hin offene dritte T-Nut 51, unterhalb von dieser eine seitlich nach außen hin offene vierte T-Nut 52 und darunter eine nach unten hin offene L-Nut 53 ausgenommen. Die Unterseite 48 des Längsprofils 2 weist eine U-Öffnung 54 auf, deren äußere Schenkelfläche 55 schräg geneigt ist und zur Anlage eines entsprechenden, an dem Tischbein 20 ausgeformten Montageabschnitts 55 dient. An der Basis der U-Öffnung 54 ist eine weitere, nach unten offen T-Nut 59 angeordnet, in der u. a. der Montageabschnitt 56 verankert wird ; das Tischbein 20 stützt sich in der dargestellten Endstellung überdies mit abgewinkelten Ansätzen 57 gegen das Längsprofil 2 ab, von denen einer in der L-Nut 53 zum Eingriff kommt. Zur Gewichtsersparnis sind in dem Längsprofil 2 verschiedene Hohlkammern 58 vorgesehen ; bezüglich weiterer Einzelheiten der Profilgestaltung wird auf die Abbildung verwiesen. Die recht komplex gestalteten Profilteile 2 ; 3 ; 5 ; 20 der Erfindung werden vorzugsweise als Strangpreßteile aus Aluminium hergestellt.

Bezugnehmend nunmehr auf die Abbildungen Fig. 4 bis 6, ist eine Abdeckplatte 10 dargestellt, mit der der Spalt 9 in der Grundplatte 5 zum Teil verschlossen werden kann. Die Abdeckplatte ist an ihren Querseiten mit einer Gegenverzahnung 35 versehen, die mit der Verzahnung 34 an der Grundplatte 5 zum Eingriff kommt und eine Positionierung der Abdeckplatte 10 in stufenweise versetzten Rastpositionen ermöglicht. In der Abdeckplatte 10 ist ein in Längsrichtung verlaufender Schlitz 11 ausgenommen, der in den Raststellungen mit dem Spalt 9 in der Grundplatte 5 fluchtet. Der Schlitz 11 dient zum Durchgriff eines Sägeblatts 7. Auf Grund der Verstellmöglichkeit in der Verzahnung 34 kann die Abdeckplatte 10 für die verschiedensten Sägetypen Verwendung finden ; ebenso ist es möglich, ein und dieselbe Abdeckplatte 10 sowohl für einen senkrechten Sägeschnitt, als auch für einen Winkelschnitt zu verwenden. Es ist jeweils nur erforderlich, die Abdeckplatte 10 an die entsprechende Durchgriffsstellung des Sägeblatts 7 durch die Grundplatte 5 zu versetzen. Im Hinblick auf die Möglichkeit, das Sägeblatt 7 für einen Winkelschnitt zu neigen, ist es von Vorteil, wenigstens eine Innenwand 70 des Schlitzes 11 anzuschrägen, wodurch das Durchführen eines entsprechend geneigten Sägeblatts 7 durch den Schlitz 11 erleichtert wird. In dem dargestellten Ausführungsbeispiel ist nur eine Innenwand 70 in dieser Form angeschrägt. Trotzdem ist eine Verwendung der Abdeckplatte 10 für Winkelstellungen der Säge beidseits der Vertikalen möglich, da die Verzahnung 34 symmetrisch an beiden Querseiten der Abdeckplatte 10 vorgesehen ist und diese sich deshalb auch um 180 Grad gedreht an der Grundplatte 5 festlegen läßt. Die Verbindung erfolgt dabei mittels einer gegen die Grundplatte wirkenden Klemmvorrichtung. Diese besteht einerseits aus einer seitlich an der Abdeckplatte 10 angeordneten Zunge 71, die in den Raststellungen der Abdeckplatte 10 unterhalb eines der Stege 33 der Grundplatte 5 zu liegen kommt, und andererseits aus einer Exzenterschraube (nicht dargestellt) für die an der gegenüberliegenden Seite der Abdeckplatte 10 eine Aussparung 72 vorgesehen ist. Um die Abdeckplatte 10 in eine gewünschte Raststellung zu bringen, wird sie mit der die Zunge 71 tragenden Querseite voran schräg gegen die Verzahnung 34 der Grundplatte 5 geführt, wobei sie auf den Abschnitten 36 beidseits des Spalts 9 zu liegen kommt. Die Zunge 71 befindet sich dabei schräg unterhalb des Steges 33. Sodann wird die Abdeckplatte 10 in einer Schwenkbewegung abgesenkt, bis auch die Gegenverzahnung 35 an der anderen Querseite mit der zugehörigen Verzahnung 34 in Eingriff kommt. Durch Betätigung der Exzenterschraube wird schließlich ein geeigneter Hebel, Nocken oder eine Nase unter den anderen Steg 33 geschwenkt und die Abdeckplatte 10 so arretiert.

Bezugnehmend wiederum auf Fig. 3, ist erfindungsgemäß die Unterseite der Grundplatte 5 in Gestalt einer Anschlags- und Führungsstruktur profiliert. Diese findet gleichermaßen Verwendung, wenn der Sägetisch 1 mit ortsfest an der Grundplatte 5 festzulegender Säge, als auch mit nur verschiebbar geführter Säge 6 bestückt wird. Im ersteren Falle ist es von Vorteil, an der Unterseite der Grundplatte 5 Pratzen (nicht dargestellt) anzuordnen, vermittels derer sich die Motorsäge lösbar an der Grundplatte 5 befestigen läßt. Für die alternative Anordnung einer verschiebbaren Motorsäge zeigt Fig. 3 einen Schlitten, der in der Anschlags- und Führungsstruktur der Grundplatte 5 aufgehängt ist. Der Schlitten 12 nimmt eine Tragplatte 75 auf, die den Fuß der in Fig. 3 nicht dargestellten Säge 6 bildet. Die Säge 6 ist so mittels des Schlittens 12 an der Grundplatte 5 verschiebbar, und zwar in Längsrichtung des Spalts 9.

Der Schlitten 12 ist an zwei an der Unterseite der Grundplatte parallel zueinander ausgeformten Schienen 80 verschiebbar geführt. Die Schienen 80 sind im Bereich der Seitenränder 30, 31 der Grundplatte 5 derart ausgeformt, daß sie unterhalb und etwa parallel zu der Grundfläche in den Raum zwischen den Längsprofilen 2 ragen. Sie greifen mit Spiel in Nuten 89 des Schlittens 12 ein, die an Führungssegmenten 88 ausgenommen sind. Der Schlitten 12 ist so auf den Schienen 80 in der Höhe unterstützt und parallel und im Abstand zu der Grundplatte 5 geführt, in seitlicher Querrichtung aber mit Bewegungsspiel auf den Schienen 80 ausgestattet.

Die Tragplatte 75 der Säge 6 ist auf einer oder mehreren, beispielsweise laschenartigen Unterstützungsflächen 84 des Schlittens 12 gehalten, wodurch die Höhenführung der Säge 6 sichergestellt ist. Die Tragplatte 75 kommt dabei zwischen dem Schlitten 12 und der Grundplatte 5 zu liegen und steht mit der an deren Unterseite vorgesehenen Führungsstruktur in Eingriff. In dem dargestellten Ausführungsbeispiel sind an der Unterseite der Grundplatte 5 zwei nach unten ragende, parallele Rippen 76 ausprofiliert. Der Schlitten 12 ist auf den Schienen 80 derart im Abstand zu der Grundplatte 5 gehalten, daß seine noch näher beschriebenen Bauteile unter den Rippen 76 hindurchlaufen. Der Schlitten 12 bzw. die Säge 6 wird aber mit der auf dem Schlitten 12 aufsitzenden Tragplatte 75 an den Rippen 76 in seitlicher Richtung zwangsgeführt. Die Tragplatte 75 ist zu diesem Zweck mit einer passenden Einprägung oder Sicke 77 versehen, die die Rippen 76 von unten her übergreift und mit ihnen in Berührkontakt steht. Man erkennt, daß in dieser Anordnung Höhen- und Seitenführung der Säge 6 an dem Profil der Grundplatte 5 erfolgen.

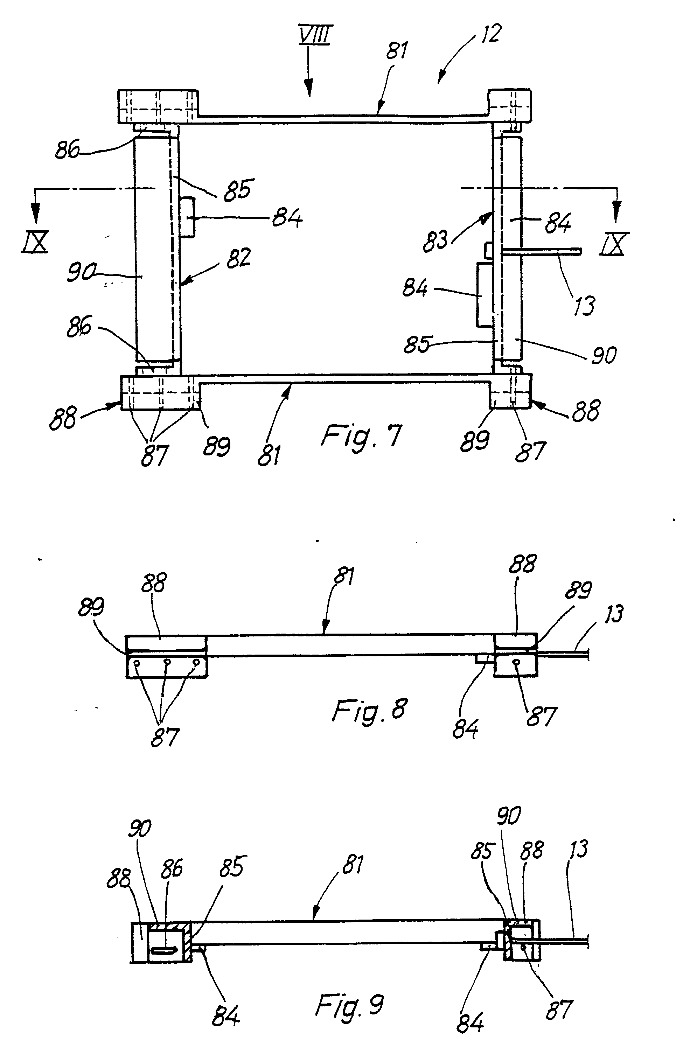

Ein Ausführungsbeispiel eines Schlittens 12 für eine verschiebbare Motorsäge 6 wird im folgenden anhand von Fig. 7 bis 9 näher erläutert. Der Schlitten 12 besteht aus einem in der Höhe verstellbaren Rahmengestell, in dem eine den Fuß der Säge 6 bildende Tragplatte 75 festklemmbar ist. Das Rahmengestell hat im wesentlichen rechteckige Gestalt. Es besteht aus zwei Längsträgern 81 und zwei Querträgern 82 ; 83, die einander jeweils paarweise gegenüberliegen und an den Ecken miteinander verbunden sind. Die Querträger 82 ; 83 weisen laschenartige Unterstützungsflächen 84 für die Tragplatte 75 der Säge 6 auf. Um die Höhenführung der Säge 6 sicherzustellen, sind die Querträger 82 ; 83 im wesentlichen L-profilförmig gestaltet, wobei der eine L-Schenkel 85 die Unterstützungsfläche 84 trägt. Dieser L-Schenkel 85 bildet eine Anlagefläche für die eine abgewinkelte Kante der Tragplatte 75, die in dem Schlitten 12 zwischen den L-Schenkeln 85 zu liegen kommt und auf der Unterstützungsfläche 84 aufsteht. Der andere Schenkel 90 der Querträger 82 ; 83 schließt mit der Oberkante des Schlittens 12 ab ; er gewährleistet eine wohldefinierte Höhenposition an der Grundplatte 5. Um den Schlitten 12 an die verschiedenen handelsüblichen Größen der Tragplatten von Motorsägen anpassen zu können, ist wenigstens einer der Querträger 82 in den Längsträgern 81 verschiebbar und arretierbar gehalten. Diese Verschiebehaltung ermöglicht überdies eine konstruktiv besonders unaufwendige Klemmverbindung zwischen dem Schlitten 12 und der Tragplatte 75. In dem dargestellten Ausführungsbeispiel ist der hintere Querträger 82 in Langlöchern 86 mit dem Längsträger verschraubbar angeordnet. Der Querträger 82 läßt sich so im Rahmen des durch die Langlöcher 86 gegebenen Verschiebespiels verstellen. Weiterhin sind an den Längsprofilen 81 verschiedene Montagebohrungen 87 vorgesehen, in denen sich wahlweise jeweils in die Langlöcher eingreifende Schrauben festlegen lassen. Nach erfolgter Größeneinstellung des Schlittens 12 werden diese Schrauben festgezogen. Die Längsträger 81 und/oder Querträger 82 ; 83 des Schlittens 12 können mit nicht näher dargestellten Ausklinkungen, Nasen usw. versehen sein, die entsprechende Abschnitte der fest mit der Säge 6 verbundenen Tragplatte 75 hintergreifen und diese so in einer Klemmstellung fixieren.

Gemäß einer bevorzugten Ausführungsform der Erfindung sind an der Außenseite der Längsträger 81 einzelne Führungssegmente 88 vorgesehen, vermittels derer der Schlitten 12 an der Grundplatte 5 verschiebbar gehalten ist. In den jeweils an den Enden der Längsträger 81 gezeigten Führungssegmenten 88 sind Nuten 89 ausgenommen, die — wie bereits erwähnt — Schienen 80 der Grundplatte 5 aufnehmen. Durch die Anordnung einzelner Führungssegmente wird ein reibungsarmer und zugleich materialsparender Aufbau des Schlittens 12 erreicht. Zur manuellen Bewegung des Schlittens 12 in den Schienen 80 dient eine Zugstange 13, die an dem vorderen Querträger 83 befestigt und mit dem Tischgestell in nachstehend beschriebener Weise verrastbar ist. Die Bewegung des Schlittens 12 erfolgt gegen die Kraft von einer oder mehreren Rückstellfedern, die einerseits an dem Schlitten 12 und andererseits an dem Tischgestell angreifen.

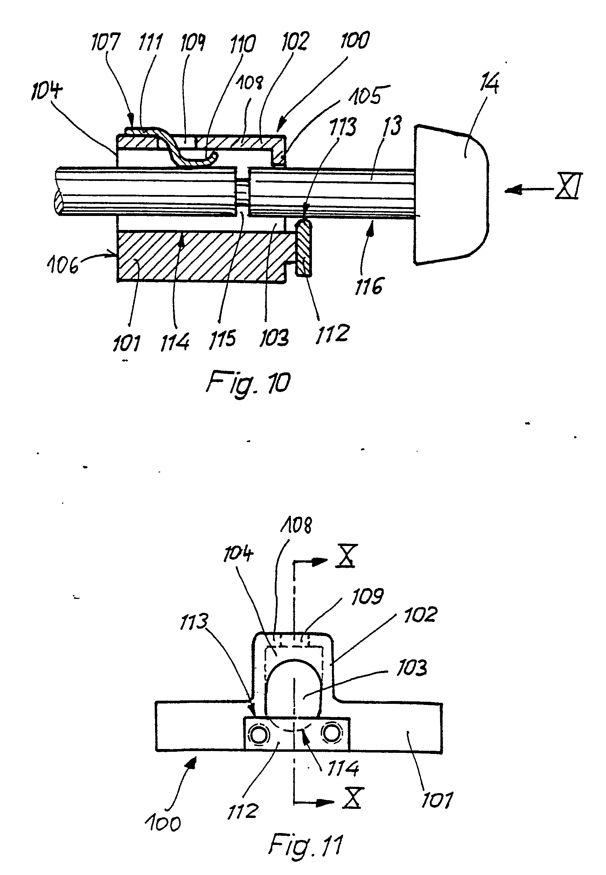

Zur Lagerung und Verrastung der Zugstange 13 an dem Tischgestell ist ein in Fig. 10 und ·11 exemplarisch dargestellter Lagerbock vorgesehen. Dieser besteht aus einem an einem Profilelement 2 ; 3 des Tischgestells festlegbaren Träger 101, der dazu in geeigneter Weise profiliert ist ; insbesondere kann der Träger 101 eine L-Profilform aufweisen (nicht dargestellt). An den Träger 101 ist eine Hülse 102 angeformt, die die Zugstange 13 aufnimmt. Die Zugstange 13 ist in Öffnungen 103, 104 der Hülse 102 geführt. Die an der Stirnwand 105 der Hülse 102 vorgesehene Öffnung 103 erscheint in Fig. 11 in Draufsicht. Sie hat die Gestalt eines sich in vertikaler Richtung erstreckenden Langlochs. Die an der Rückwand 106 der Hülse 102 angeordnete Öffnung 104 hat in ihrem unteren Bereich dieselbe Form, ist aber nach oben hin zu einer rechteckigen Ausnehmung erweitert. Diese Gestaltung der Öffnungen 103 ; 104 ermöglicht ein vertikales Bewegungsspiel der Zugstange 13 in der Hülse 102. Die Zugstange 13 ist bei dieser vertikalen Bewegung durch die Kraft einer Steilfeder belastet. Diese hat in dem dargestellten Ausführungsbeispiel die Gestalt einer Blattfeder 107, die oberhalb der Zugstange 13 in die Hülse 102 eingesteckt ist. Zu diesem Zweck ist in der Deckwand 108 der Hülse 102 ein Fenster 109 ausgeschnitten, in das die S-förmig gebogene Blattfeder 107 mit einem Schenkel 110 voran eingesteckt wird. In der Endstellung kommt dieser Schenkel 110 innerhalb und der andere Schenkel 111 außerhalb der Hülse 102 zu liegen. Zur Verrastung der Zugstange 13 dient eine an der Stirnwand 105 beispielsweise durch Verschrauben befestigte Schneide 112. Die Oberkante 113 der Schneide 112 liegt dabei gegenüber dem tiefsten Punkt der Öffnung 103 nach oben versetzt, so daß die Zugstange 13 nicht auf dem Boden 114 der Hülse 102, sondern auf der Schneide 112 geführt ist. An geeigneter Stelle ist auf dem Umfang der Zugstange 13 eine Ringnut 115 ausgenommen, die einen Eingriff der Schneide 112 ermöglicht. Wird die Zugstange 13 so weit aus der Hülse 102 herausbewegt, daß die Ringnut 115 oberhalb der Schneide 112 zu liegen kommt, so wird die Zugstange 13 durch die Blattfeder 107 nach unten in eine Rastposition gedrückt, in der die Schneide 112 in die Ringnut 115 einfällt. Die Öffnungen 103, 104 gewährleisten das nötige Bewegungsspiel der Zugstange 13 nach unten. Um die Zugstange 13 aus der Raststellung zu entriegeln, wird sie angehoben und um einen kleinen Betrag in Axialrichtung versetzt, so daß sie wieder mit ihrer Mantelfläche 116 auf der Schneide 112 läuft. Um die Raststellung der Zugstange 13 zu sichern, kann an dem Lagerbock 100 ein Riegel, beispielsweise in Gestalt eines Schwenkhebels (nicht dargestellt), vorgesehen sein, der entweder von oben her in dieselbe Ringnut 115 oder eine zweite, an der Zugstange 13 vorgesehene Ringnut (nicht dargestellt) absenkbar ist. Durch diesen Riegel wird die Zugstange in gewünschten Endstellungen festgehalten und gegen eine versehentliche Betätigung gesichert.

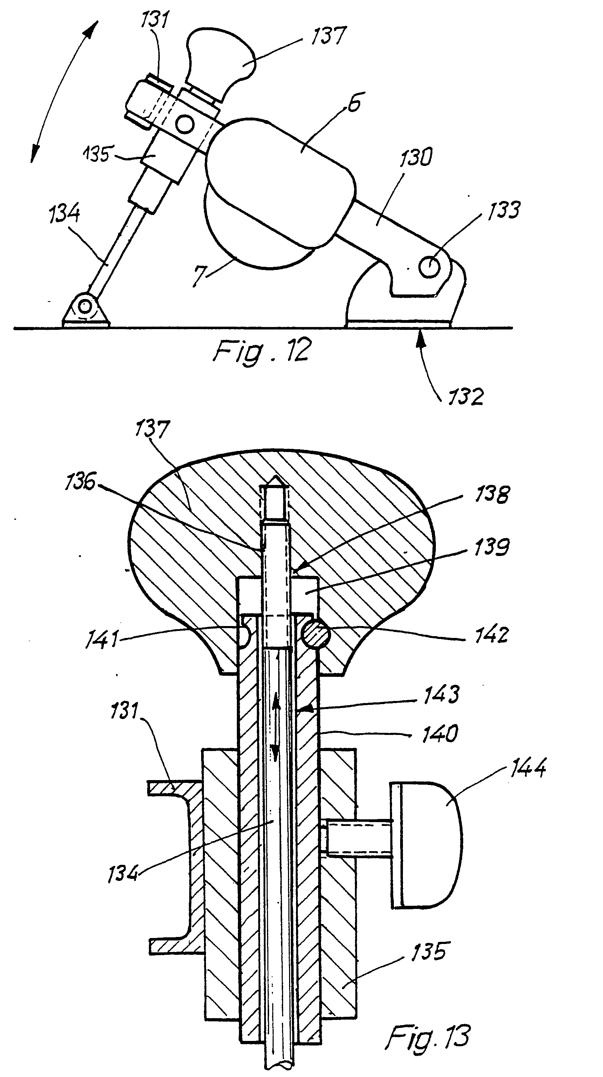

Gemäß einer bevorzugten Weiterbildung der Erfindung läßt sich die Säge 6 an dem Tischgestell in Winkelstellungen ihres Sägeblatts 7 neigen und in der Schnittiefe verstellen. Eine bevorzugte Einrichtung zur Schnittiefenverstellung wird anhand der Abbildungen Fig. 12 und Fig. 13 nachstehend erläutert. Fig. 12 zeigt schematisch eine Säge 6, die an einem Hebel 130 mit einem Griff 131 montiert ist. Der Hebel 130 ist mit dem dem Griff 131 gegenüberliegenden Ende an eine Unterstützungsplatte 132 angelenkt. Der Drehpunkt des Hebels 130 bzw. der Säge 6 ist mit 133 bezeichnet. Der Hebel 130 ist im Bereich des Griffs 131 gegen die Unterstützungsplatte 132 verstrebt. Hierzu dient eine Spindel 134, die im Abstand von dem Drehpunkt 133 der Säge 6 gelenkig an der Unterstützungsplatte 132 gelagert ist. Der Hebel 130 ist mit der Spindel 134 über einen Klotz 135 verbunden. Zur Einstellung der Schnittiefe der Säge wird der Klotz 135 auf die Spindel 134 abgesenkt. Dabei ist eine Grob- und Feineinstellung möglich, die anhand von Fig. 13 näher erläutert wird.

Demnach ist die Spindel 134 an ihrem nicht angelenkten Ende mit einem Gewinde 136 versehen, auf das sich ein Stellknopf 137 aufschrauben läßt. Der Stellknopf 137 weist hierzu eine konzentrisch abgestufte Bohrung 138 auf. Der innerste Bereich kleinsten Durchmessers der Bohrung 138 ist mit einem passenden Gegengewinde für die Spindel 134 versehen. Ein vorgelagerter, erweiterter Bereich 139 der Bohrung 138 dient zur Aufnahme einer zylindrischen Hülse 140, die in dem Stellknopf 137 mit Drehspiel, aber axial nicht verschiebbar, befestigt ist. Zur Befestigung dient eine am Ende der Hülse 140 ausgenommene, konzentrisch umlaufende Ringnut 141, in die ein fest mit dem Stellknopf 137 verbundener Stift 142 oder ein entsprechend wirkender Sprengring (nicht dargestellt) einfällt. Die Hülse 140 ist in der Bohrung 138 frei drehbar, wobei sie an dem Stift 142 geführt ist ; sie ist weiterhin durch den Stift 142 gegen eine axiale Verschiebung aus dem Stellknopf 137 heraus arretiert. Die Hülse 140 weist eine Innenbohrung 143 auf, durch die sich die Spindel 134 mit Spiel hindurchstecken läßt. Unterhalb des Stellknopfes 137 ist auf die Hülse 140 der Klotz 135 aufgesteckt, über den die Verbindung zu dem die Säge 6 tragenden Hebel 130 hergestellt wird. Der Klotz 135 läßt sich vermittels eines Feststellrades 144 wahlweise auf die Hülse 140 klemmen und von der Hülse lösen. Er ist seinerseits mit Spiel an dem die Säge 6 tragenden Hebel 130 befestigt, z. B. in einer Gabel des Hebels 130 verschiebbar aufgehängt.

Die beschriebene Vorrichtung zur Schnittiefenverstellung der Säge 6 funktioniert nun wie folgt : Für eine Grobeinstellung der Schnittiefe wird zunächst das Feststellrad 144 gelöst und der Klotz 135 auf der Hülse 140 verschoben, bis die gewünschte Winkelstellung des Hebels 130 erreicht ist. Sodann wird das Feststellrad 144 angezogen und der Klotz 135 dadurch auf der Hülse 140 verklemmt. Für eine Feineinstellung der Schnittiefe kann sodann der Stellknopf 137 gedreht werden. Hierdurch wird die Spindel 134 in den Stellknopf 137 hinein- bzw. herausgeschraubt. Die Drehbewegung des Stellknopfes wird dabei in eine axiale Bewegung entlang der Spindel 134 umgesetzt, die sich über die Steigung des Gewindes 136 sehr fein regulieren läßt. Mit dem Stellknopf 137 wird in Axialrichtung die Hülse 140 mitgenommen, die sich bei einer Drehung des Stellknopfes 137 nicht mitdreht und somit nur die Axialbewegung des Stellknopfes 137 auf den Klotz 135 und den damit verbundenen Hebel 130 überträgt.

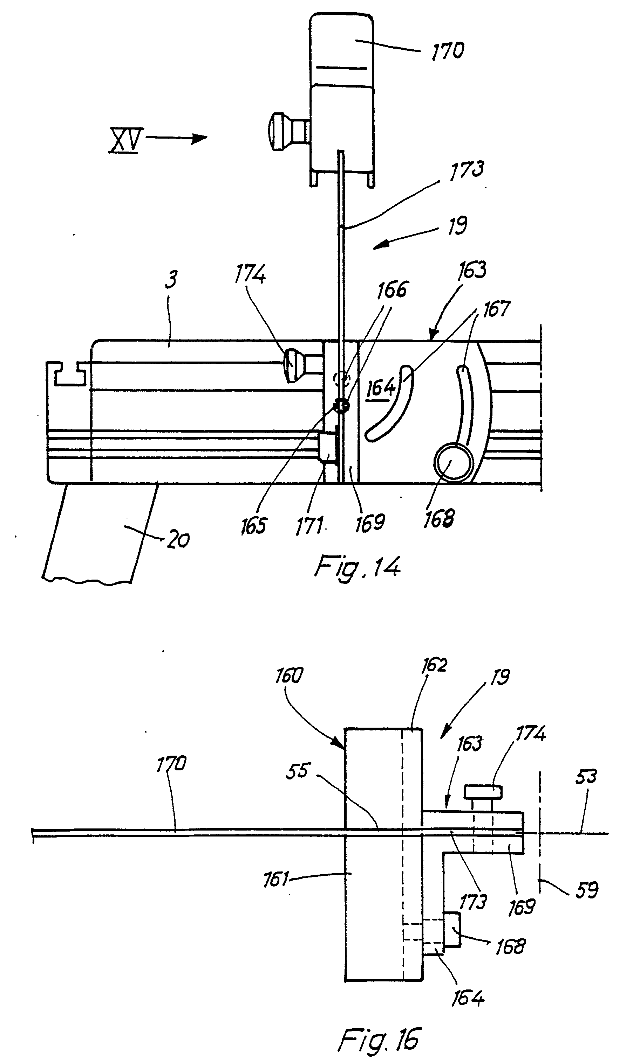

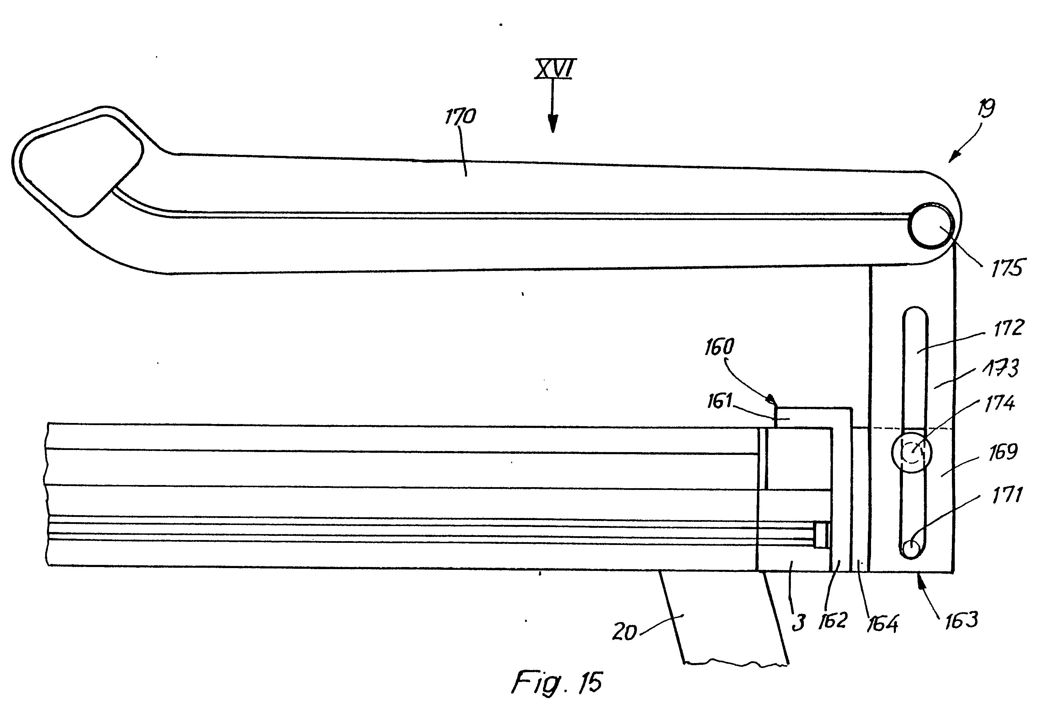

Um der Möglichkeit, das Sägeblatt 7 der Säge 6 für Winkelschnitte zu neigen, Rechnung zu tragen, ist der erfindungsgemäße Sägetisch 1 mit einem Sägeschutzhalter 19 ausgerüstet, der sich entsprechend neigen läßt. Ein Ausführungsbeispiel eines derartigen Sägeschutzhalters 19 wird im folgenden anhand der Abbildungen Fig. 14 bis 16 beschrieben. Der Sägeschutzhalter 19 wird vermittels eines Winkels 160 an der Außenseite des Tischgestells und insbesondere an einem Querprofil 3 festgelegt. Der Winkel 160 kommt dazu mit den Innenseiten seiner Schenkel 161, 162 an dem Querprofil 3 zu liegen. Zur Befestigung in dieser, das Querprofil 3 übergreifenden Stellung können geeignete Klemmittel vorgesehen sein, die beispielsweise in eine Längsnut des Querprofils 3 eingreifen und im nicht angezogenen Zustand zugleich eine Verschiebebewegung des Winkels 160 an dem Querprofil 3 entlang ermöglichen. An dem gleichen Winkel 160 ist ein zweiter Winkel 163 drehbar und arretierbar befestigt. Ein Schenkel 164 des zweiten Winkels 163 kommt dabei bündig mit dem Schenkel 162 an der Außenseite des Querprofils 3 zur Anlage und ist an diesem um einen Stift 165 drehbar gehalten. Fig. 14 zeigt in Gestalt von in den Schenkeln 162, 164 ausgenommenen, fluchtenden Führungslöchern 166 zwei mögliche Positionen für den Stift 165, die verschiedenen Typen von Sägen 6 zugeordnet sind. Die Drehung des zweiten Winkels 163 um den Stift 165 ist winkelbegrenzt. Zu diesem Zweck ist konzentrisch zu den Führungslöchern 166 je ein Ringspalt 167 ausgenommen, der sich über den Teil eines Vollkreises erstreckt. Jedem Ringspalt 167 ist somit ein eigener Drehpunkt für die Schwenkbewegung des Sägeschutzhalters 19 zugeordnet, und zwar in Gestalt des zur Aufnahme des Stifts 165 geeigneten Führungslochs 166. In den Ringspalten 167 läuft eine Bundschraube 168, die mit ihrem Schaft durch den Ringspalt 167 durchgesteckt und in eine geeignete Bohrung auf dem Schenkel 162 des ersten Winkels 160 verschraubt wird. Im eingeschraubten Zustand übt dabei der Bund der Bundschraube 168 einen Anpreßdruck auf den zweiten Winkel 163 aus, durch den dieser an dem ersten Winkel 160 arretiert wird. Wird die Bundschraube 168 hingegen gelöst, so ist ein Verschwenken der Winkel 160 ; 163 in einem Stellbereich möglich, der durch die Bogenlänge des Ringspalts 167 definiert wird. Je nach dem Typ der verwendeten Säge 6 sind Führungslöcher 166 und die zugehörigen Ringspalte 167 paarweise mit einem Stift 165 bzw. einer Bundschraube 168 belegt. Das jeweils andere Führungsloch 166 und der zugehörige Ringspalt 167 bleiben hingegen frei.

Während über den Schenkel 164 des zweiten Winkels 163 eine Neigung gegenüber dem ersten Winkel 160 ermöglicht wird, mit der der Neigung der Säge 6 gefolgt werden kann, dient der zweite Schenkel 169 als Träger des Sägeschutzes 170. Hierzu ist eine Anordnung vorgesehen, vermittels derer sich der Sägeschutz 170 in der Ebene des Sägeblatts 7 höhenverstellbar über die Säge klappen läßt. Zur Höhenverstellung ist an dem Schenkel 169 ein Bolzen 171 befestigt, auf den mittels eines Langlochs 172 ein vertikaler Arm 173 des Sägeschutzes 170 aufgesetzt wird. Der Arm 173 ist in dem Langloch 172 auf dem Bolzen 171 zugleich verschiebbar und schwenkbar. Zur Arretierung in der gewünschten Höhenstellung dient ein Fangstift 174, der durch das Langloch 172 hindurchgreift und in einer Ausnehmung des Schenkels 169 aufgenommen wird. Nach Lösen des Fangstifts 174 läßt sich der Sägeschutz 170 um die Achse des Bolzens 171 herum in der Ebene des Sägeblatts 7 verschwenken. Im Interesse eines weiteren Bewegungsfreiheitsgrads ist am oberen Ende des Arms 173 ein Achsstück 175 vorgesehen. An diesem Achsstück 175 ist der Sägeschutz 170 angelenkt, so daß er über das Sägeblatt 7 geklappt werden kann. Mit dem beschriebenen Sägeschutzhalter 19 ist es ersichtlich möglich, ein und denselben Sägeschutz 170 für verschiedene Sägetypen zu verwenden und mit dem Sägeschutz 170 sowohl einer Neigung als auch eine Schnittiefenverstellung der Säge 6 zu folgen.

Es sei noch nachgetragen, daß der Kopf der Exzenterschraube 44 und der anderen verwendeten Klemmittel vorteilhafterweise einen Schlitz aufweisen kann, der zum Eingriff eines Schraubenziehers, aber auch einer jederzeit zur Verfügung stehenden Geldmünze geeignet ist.

**Patentansprüche**

1. Sägetisch mit einem aus Profilelementen (2, 3) aufgebauten Tischgestell und einer daran festlegbaren Grundplatte (5), in der ein zum Durchgriff eines Sägeblattes (7) einer an der Grundplatte (5) anordenbaren Säge (6) geeigneter Spalt (9) ausgenommen ist, und mit an der Unterseite der Grundplatte (5) vorgesehenen Einrichtungen zur Befestigung und/oder Führung der Säge (6), dadurch gekennzeichnet, daß wenigstens ein Profilelement (2) unter Bildung einer unterhalb der Tischebene (38) versenkt liegenden, von Längsrinnen (41) flankierten Rundführung (40) abgestuft ist und ein Seitenrand (30) der Grundplatte (5) mit einer als Form-Negativ der Rundführung (40) gestalteten Einbuchtung (42) versehen ist, mit der die Grundplatte (5) auf die Rundführung (40) auswechselbar aufsetzbar ist, wobei sie in ihrer Arretierungsstellung mit dem Rücken (4) eines oder mehrerer der Profilelemente (2) fluchtet und eine gemeinsame Tischebene (38) bildet.

2. Sägetisch nach Anspruch 1, dadurch gekennzeichnet, daß die Einbuchtung (42) von Laschen oder laschenartigen Abschnitten (43) begrenzt wird, die durch eine Schwenkbewegung der Grundplatte (5) um die Rundführung (40) in die Längsrinnen (41) des Profilelementes (2) in Eingriff kommen.

3. Sägetisch nach Anspruch 1 od. 2, dadurch gekennzeichnet, daß die Grundplatte (5) mit dem der Einbuchtung (42) gegenüberliegenden Seitenrand (31) auf die Rundführung (40) eines Profilelementes (2) absenkbar und dort mittels einer Exzenterschraube (44) verrastbar ist, deren Exzenterglied in einer Längsrinne (41) unterhalb der Rundführung (40) zum Eingriff kommt.

4. Sägetisch nach Anspruch 1 bis 3, dadurch gekennzeichnet, daß der Spalt (9) der Grundplatte (5) mittels einer geschlitzten Abdeckplatte (10) teilweise verschließbar ist.

5. Sägetisch nach Anspruch 4, dadurch gekennzeichnet, daß der Spalt (9) in der Grundplatte (5) an seinen Querseiten (32) durch Stege (33) begrenzt wird, die eine Verzahnung (34) tragen, mit der eine an der Abdeckplatte (10) vorgesehene Gegenverzahnung (35) in quer zu dem Spalt (9) stufenweise versetzten Raststellungen zum Eingriff kommt, wobei z. B. die Abdeckplatte (10) in ihren Raststellungen auf Abschnitten (36) der Grundplatte (5) beidseits des Spalts (9) aufliegen und den Spalt (9) überspannen und ein in der Abdeckplatte (10) ausgenommener Schlitz (11), von dem wenigstens eine Innenwand (70) des Schlitzes (11) angeschrägt sein kann, mit dem Spalt (9) fluchten kann.

6. Sägetisch nach Anspruch 5, dadurch gekennzeichnet, daß die Abdeckplatte (10) mit einer gegen die Grundplatte (5) wirkenden Klemmvorrichtung versehen ist, die aus einer in den Raststellungen der Abdeckplatte (10) unterhalb des Steges (33) zu liegen kommenden Zunge (71) und/oder einer Betätigungsschraube mit einem Exzenterglied besteht.

7. Sägetisch nach einem der Ansprüche 1 bis 6, dadurch gekennzeichnet, daß an der Unterseite der Grundplatte (5) Pratzen angeordnet sind, vermittels derer sich die Säge ortsfest an der Grundplatte (5) lösbar befestigen läßt.

8. Sägetisch nach einem der Ansprüche 1 bis 7, dadurch gekennzeichnet, daß die Säge (6) mittels eines an der Führungseinrichtung an der Unterseite der Grundplatte angeordneten Schlittens (12) verschiebbar ist, der eine den Fuß der Säge bildende Tragplatte (75) aufnimmt und der z. B. in einer oder mehreren, an der Unterseite der Grundplatte (5) ausgeformten Schienen (80) im Abstand zu der Grundplatte verschiebbar geführt und evtl. zur Sicherstellung der Höhenführung der Säge (6) eine oder mehrere Unterstützungsflächen für die Tragplatte (75) aufweisen kann, auf denen diese zwischen dem Schlitten (12) und der Grundplatte (5) zu liegen kommt.

9. Sägetisch nach Anspruch 8, dadurch gekennzeichnet, daß die Tragplatte zur Sicherstellung der Seitenführung der Säge (6) an der an der Unterseite der Grundplatte ausgestalteten Führungseinrichtung geleitet wird, wobei z. B. an der Unterseite der Grundplatte eine oder mehrere parallele Rippen (76) nach unten ragen können, die die Tragplatte (75) mit einer Einprägung oder Sicke (77) unter Berührkontakt übergreifen kann.

10. Sägetisch nach Anspruch 8, dadurch gekennzeichnet, daß der Schlitten (12) aus einem in der Größe verstellbaren, z. B. rechteckigen Rahmengestell besteht, in dem die den Fuß der Säge bildende Tragplatte (75) festklemmbar ist und das z. B. aus zwei durch Querträger (82 ; 83) verbundenen Längsträgern (81) bestehen kann, wobei z. B. wenigstens einer der Querträger (82) in den Längsträgern (81) verschiebbar und arretierbar sein kann und die Querträger (82 ; 83) z. B. im wesentlichen L-förmige Gestalt haben, laschenartige Unterstützungsflächen (84) für die Tragplatte (75) aufweisen und in Langlöchern (86) mit den Längsträgern (81) verschraubbar sein können, während die Längsträger (81) an ihrer Außenseite Führungssegmente (88) tragen können, die zum Eingriff einer Schiene (80) der Grundplatte (5) geeignete Nuten (89) aufweisen.

11. Sägetisch nach Anspruch 9 oder 10, dadurch gekennzeichnet, daß an dem Schlitten (12) eine an dem Tischgestell verrastbare Zugstange (13) montiert ist, vermittels derer der Schlitten (12) rückstellfederbelastet an der Grundplatte (5) verschiebbar ist, wobei z. B. an einem Profilelement (2 ; 3) des Tischgestells ein Lagerbock (100) festlegbar sein kann, der eine die Zugstange (13) aufnehmende Hülse (102) sowie eine Schneide (112) aufweisen kann, die in eine an der Zugstange (13) ausgenommene Ringnut (115) einkämmt und so die Zugstange verriegelt, und wobei z. B. weiterhin die Hülse (102) mit einem Fenster (109) versehen sein kann, in das eine die Zugstange (13) beaufschlagende Blattfeder (107) anhebbar und aus der Eingriffsstellung der Schneide (112) entriegelbar sein kann.

12. Sägetisch nach einem der Ansprüche 1 bis 11, dadurch gekennzeichnet, daß sich die Säge (6) in Winkelstellungen des Sägeblatts (7) neigen und in ihrer Schnittiefe verstellen läßt, z. B. indem im Abstand von einem Drehpunkt (133) der Säge (6) eine Spindel (134) gelenkig gelagert ist, an der ein die Säge (6) tragender Hebel (130) abgestützt und für eine Grob- und Feineinstellung der Schnittiefe verstellbar ist, wobei vorzugsweise auf die Spindel (134) ein Stellknopf (137) aufschraubbar sein kann, an dem mit Drehspiel eine axial nicht verschiebbare Hülse (140) befestigt ist, und an dem Hebel (130) der Säge (6) mit Spiel ein an der Hülse (140) festklemmbarer Klotz (135) angeordnet sein kann.

13. Sägetisch nach Anspruch 12, dadurch gekennzeichnet, daß an dem Tischgestell ein Sägeschutzhalter (19) festlegbar ist, der sich der Neigung der Säge (6) entsprechend neigen und in der Ebene des Sägeblattes (7) höhenverstellbar über die Säge (6) klappen läßt, z. B. indem er zwei aneinander angelenkte Winkel (160 ; 163) aufweisen kann, von denen der erste (160) mit den Innenseiten seiner Schenkel (161 ; 162) an einem Profilelement (2 ; 3) des Tischgestells festlegbar sein kann, während der zweite Winkel (163) mit einem Schenkel (164) verdrehbar und arretierbar an dem ersten Winkel (160) befestigt sein und an dem anderen Schenkel (169) einen Bolzen (171) tragen kann, auf den ein den Sägeschutz (170) halternder Arm (173) verschiebbar aufgesteckt ist.

14. Sägetisch nach Anspruch 13, dadurch gekennzeichnet, daß in dem an dem ersten Winkel (160) anliegenden Schenkel (164) des zweiten Winkels (163) ein oder mehrere, verschiedenen Sägetypen zugeordnete, konzentrisch zu der Neigungsachse des Sägeschutzhalters (19) verlaufende Ringspalte (167) ausgenommen sind, in denen eine an dem ersten Winkel (160) verschraubbare Bundschraube (168) läuft, wobei z. B. jedem Ringspalt (167) ein eigener Drehpunkt für die Schwenkbewegung des Sägeschutzhalters (19) zugeordnet sein kann, beispielsweise in Gestalt eines zur Aufnahme eines Stifts (165) geeigneten Führungslochs (166).

15. Sägetisch nach einem der Ansprüche 11 bis 14, dadurch gekennzeichnet, daß der den Bolzen (171) tragende Schenkel (169) des zweiten Winkels (163) mit einer Ausnehmung zur Aufnahme eines Fangstifts (174) versehen ist und der Arm (173) ein Achsstück (175) trägt, um das der Sägeschutz (170) über das Sägeblatt (7) geklappt werden kann, wobei z. B. der Sägeschutz (170) nach Lösen des Fangstifts (174) um die Achse des Bolzens (171) herum in der Ebene des Sägeblattes (7) verschwenkbar sein kann.

**Claims**

1. Saw bench with a bench frame comprised of profile sections (2, 3) and a base (5) which can be fastened to it, and in which an opening (9) has been made, suitable for the passage of the saw blade (7) of a saw (6) which can be mounted on the base (5), and with devices for fastening and/or guidance of the saw (6) provided on the underside of the base (5), characterized in that at least one profile section (2), forming a circular guide (40) flanked by longitudinal grooves (41) and recessed below the bench surface (38), is stepped, and one side edge (30) of the base (5) is provided with a recess (42) designed as the negative form of the circular guide (40), by means of which the base (5) can be mounted on the circular guide (40) so as to be interchangeable ; in its locked position the base is flush with the back (4) of one or more of the profile sections (2) and forms a common bench surface (38).

2. Saw bench as described in claim 1, characterized in that the recess (42) is defined by tongues or tongue-like sections (43) which, through a rotating movement of the base (5) around the circular guide (40), engage in the longitudinal grooves (41) of the profile section (2).

3. Saw bench as described in claim 1 or 2, characterized in that the base (5) can be lowered with the side edge (31) opposite the recess (42) on the circular guide (40) of a profile section (2), and can be locked in this position by means of an eccentric pin (44), the eccentric element of which engages in a longitudinal groove (41) beneath the circular guide (40).

4. Saw bench as described in claims 1 to 3, characterized in that the opening (9) of the base (5) can be partially closed by means of a slotted covering plate (10).

5. Saw bench as described in claim 4, characterized in that the opening (9) in the base (5) is defined at its transverse sides (32) by webs (33) with teeth (34), with which mating teeth (35) provided on the covering plate (10) engage in successively offset dwell positions at right-angles to the opening (9), whereby e. g. the covering plate (10) in its dwell positions can rest on sections (36) of the base (5) on either side of the opening (9) and can span the opening (9), and a slot (11), at least one inner wall of which can be bevelled, made in the covering plate (10), can be flush with the opening (9).

6. Saw bench as described in claim 5, characterized in that the covering plate (10) is provided with a clamping device acting against the base (5), and is comprised of a tongue (71) which comes to lie underneath the web (33) in the dwell positions of the covering plate (10), and/or an actuating screw with an eccentric member.

7. Saw bench as described in any of claims 1 to 6, characterized in that claws are fitted to the underside of the base (5), and by means of which the saw can be fixed to the base (5), so as to be removable.

8. Saw bench as described in any of claims 1 to 7, characterized in that the saw (6) can be moved by means of a carriage (12) mounted on the guiding device on the underside of the base, and which holds a mounting (75) forming the base of the saw and which e. g. can be guided at a distance from the base in one or more rails (80) formed on the underside of the base (5), and which may have, to ensure the vertical guidance of the saw (6), one or more support surfaces for the mounting (75), which comes to rest on these between the carriage (12) and the base (5).

9. Saw bench as described in claim 8, characterized in that, to ensure the lateral guidance of the saw (6), the mounting is guided on the guidance device formed on the inderside of the base, whereby e. g. one or more parallel ribs (76) can project downwards from the underside of the base, these ribs being able to overlap the mounting (75) with an impression or bead (77) and with contact.

10. Saw bench as described in claim 8, characterized in that the carriage (12) comprises an e. g. rectangular frame, adjustable in size, in which the mounting (75) forming the base of the saw can be securely clamped and which may be comprised e. g. of two longitudinal members (81) connected by transverse members (82 ; 83), with at least one of the transverse members (82) being movable and lockable in the longitudinal members (81), and the transverse members (82 ; 83) being e. g. essentially L-shaped, with strap-type support surfaces (84) for the mounting (75), and capable of being bolted to the longitudinal members (81) in elongated holes (86), while the longitudinal members (81) are able to carry guide segments (88) on their outside, these having suitable grooves (89) to engage a rail (80) of the base (5).

11. Saw bench as described in claim 9 or 10, characterized in that mounted on the carriage (12) is a connecting rod (13) which can be locked at the bench frame, and by means of which the carriage (12) can be moved with spring-return loading, whereby at one profile section (2 ; 3) of the bench frame can be fixed a pedestal (100), which can have a sleeve (102) accommodating the connecting rod (13) together with a « knife-edge » (112) which engages in an annular groove (115) made in the connecting rod (13), thus locking the connecting rod (13), and whereby e. g. in addition the sleeve (102) can be provided with an aperture (109) in which a leaf spring (107) acting upon the connecting rod (13) can be raised and released from the engaged position of the knife-edge (112).

12. Saw bench as described in any of claims 1 to 11, characterized in that the blade (7) of the saw (6) can be set at an angle and its cutting depth can be varied, e. g. by means of a spindle (134) pivotably mounted at a distance from a centre of rotation (133) of the saw (6), this spindle supporting a lever (130) carrying the saw (6) and capable of adjustment for coarse and fine setting of cutting depth, whereby preferably it is possible to screw on to the spindle (134) and adjusting knob (137), to which is fastened, with freedom to rotate, a sleeve (140) which can not be moved in the axial direction, and a block (135) which can be firmly clamped to the sleeve (140), can be fitted with play to the lever (130) of the saw (6).

13. Saw bench as described in claim 12, characterized in that a saw guard holder (19) can be fixed to the bench frame, and can be inclined to correspond with the inclination of the saw (6), and can be adjusted in height so as to hinge over the saw (6) in the plane of the saw blade (7), e. g. by means of two angles (160 ; 163) pivoted together, the first of which (160) can be fastened with the insides of its leg (161 ; 162) to a profile section (2 ; 3) of the bench frame, while the second angle (163) can be fastened by one leg (164), so as to be capable of turning and locking, to the first angle (160) and on the other leg (169) can carry a pin (171) on which an arm (173) holding a saw guard (170) can be movably mounted.

14. Saw bench as described in claim 13, characterized in that the leg (164) of the first angle (160) fitting against the second angle (163) has one or more annular slots (167), matching various types of saw, and running concentrically to the axis of inclination of the saw guard holder (19), these slots having a collar screw (168) which can be screwed to the first angle (160), whereby e. g. each annular slot (167) can be assigned a separate point of rotation for the rotational movement of the saw guard holder (19), for example in the form of a guide-hole (166) suitable for accepting a pin (165).

15. Saw bench as described in any of claims 11 to 14, characterized in that the leg (169) of the second angle (163) carrying the pin (171) is provided with a recess to accept a pin stop (174) and the arm (173) carries an axle member (175), in order that the saw guard (170) can be hinged over the saw blade (7), whereby e. g. the saw guard (170), after the pin stop (174) has been released, can be rotated around the axis of the pin (171) in the plane of the saw blade (7).

**Revendications**

1. Table de sciage, avec un cadre de table constitué d'éléments profilés (2, 3), avec un plateau (5) qui peut être fixé sur ce cadre et dans lequel est pratiquée une fente (9) permettant le passage d'une lame de scie (7) d'une scie (7) qui peut être disposée sur le plateau (5), et avec des dispositifs, prévus sur le dessous du plateau (5), pour la fixation et/ou le guidage de la scie (6), caractérisée en ce qu'au moins un élément profilé (2) est échelonné en formant un guide rond (40) noyé en dessous du plan (38) de la table et flanqué de rainures longitudinales (41), et un bord latéral (30) du plateau (5) est muni d'un renfoncement (42) de forme complémentaire à celle du guide rond (40) et au moyen duquel le plateau (5) peut être monté avec possibilité de remplacement sur le guide rond (40), le plateau (5) étant, à sa position de blocage, aligné avec le dos (4) d'un ou plusieurs des éléments profilés (2), et formant un plan de table commun (38).

2. Table de sciage selon la revendication 1, caractérisée en ce que le renfoncement (42) est délimité par des pattes ou parties du genre pattes (43) qui, par un mouvement de pivotement du plateau (5) autour du guide (40), viennent en engagement dans les rainures longitudinales (41) de l'élément profilé (2).

3. Table de sciage selon la revendication 1 ou 2, caractérisée en ce que le bord latéral (31) du plateau (5) qui est opposé au renfoncement (42) peut être abaissé sur le guide rond (40) d'un élément profilé (2) et y être enclenché au moyen d'une vis à excentrique (44) dont l'élément excentrique vient s'engager dans une rainure longitudinale (41) en dessous du guide rond (40).

4. Table de sciage selon l'une quelconque des revendications 1 à 3, caractérisée en ce que la fente (9) du plateau (5) peut être partiellement obturée au moyen d'une plaque de recouvrement fendue (10).

5. Table de sciage selon la revendication 4, caractérisée en ce que la fente (9) pratiquée dans le plateau (5) est délimitée sur ses côtés transversaux (32) par des entretoises (33) qui portent une denture (34), avec laquelle une denture complémentaire (35) prévue sur la plaque de recouvrement (10) vient s'engager à des positions de crantage décalées par gradins perpendiculairement à la fente (9), la plaque de recouvrement (10) pouvant par exemple, à ses positions de crantage, s'appuyer sur des parties (36) du plateau (5) des deux côtés de la fente (9) et recouvrir la fente (9), et une fente (11) — qui est pratiquée dans la plaque de recouvrement (10) et dont au moins une paroi intérieure (70) peut être biseautée — pouvant s'aligner avec la fente (9).

6. Table de sciage selon la revendication 5, caractérisée en ce que la plaque de recouvrement (10) est munie d'un dispositif de serrage agissant contre le plateau (5), qui est constitué d'une languette (71) venant se placer en dessous de l'entretoise (33) aux positions de crantage de la plaque de recouvrement (10), et/ou d'une vis d'actionnement avec un élément excentrique.

7. Table de sciage selon l'une quelconque des revendications 1 à 6, caractérisée en ce que des griffes sont disposées sur le dessous du plateau (5), au moyen desquels la scie peut être fixée stationnairement et de manière amovible sur le plateau (5).

8. Table de sciage selon l'une quelconque des revendications 1 à 7, caractérisée en ce que la scie (6) peut être déplacée au moyen d'un chariot (12) disposé sur le dispositif de guidage sur le dessous du plateau, lequel chariot reçoit une plaque de support (75) formant le socle de la scie, est guidé en coulissement à distance du plateau dans des glissières (80) formées sur le dessous du plateau (5), et peut éventuellement présenter, afin d'assurer le guidage en hauteur de la scie (6), une ou plusieurs surfaces de soutien pour la plaque de support (75), sur lesquelles cette dernière vient se placer entre le chariot (12) et le plateau (5).

9. Table de sciage selon la revendication 8, caractérisée en ce que la plaque de support est, afin d'assurer le guidage latéral de la scie (6), dirigée contre le dispositif de guidage configuré sur le dessous du plateau, une ou plusieurs nervures parallèles (76) pouvant par exemple faire saillie vers le bas à partir du dessous du plateau, lesquelles peuvent par exemple s'engager en attouchement par le dessus avec une empreinte ou moulure (77) de la plaque de support (75).

10. Table de sciage selon la revendication 8, caractérisée en ce que le chariot (12) est constitué d'un bâti, par exemple rectangulaire, de dimensions réglables, dans lequel peut être bloquée par serrage la plaque de support (75) formant le socle de la scie, et qui peut être par exemple constitué de deux longerons (81) mutuellement assemblés par des traverses (82 ; 83), au moins une des traverses (82) pouvant par exemple être coulissée et bloquée dans des longerons (81), et les traverses (82 ; 83) possédant une forme par exemple sensiblement en L, présentant des surfaces de soutien (84) en forme de pattes pour la plaque de support (75), et pouvant être vissées avec les longerons (81) dans des orifices oblongs (86), tandis que les longerons (81) peuvent porter sur leur côté extérieur des segments de guidage (88) qui présentent des rainures (89) aptes à l'engagement d'une glissière (80) du plateau (5).

11. Table de sciage selon la revendication 9 ou 10, caractérisée en ce qu'une tige de traction (13) enclenchable sur le cadre de la table est montée sur le chariot (12), au moyen de laquelle le chariot (12) peut être déplacé contre le plateau (5) en étant sollicité par ressort de rappel, un palier de support (100) pouvant par exemple être fixé sur un élément profilé (2 ; 3) du cadre de table, palier qui peut présenter un manchon (102) recevant la tige de traction (13) ainsi qu'une arête vive (112), laquelle s'engage dans une rainure annulaire (115) évidée sur la tige de traction (13) et verrouille ainsi la tige de traction, et le manchon (102) pouvant par exemple en outre être muni d'une fenêtre (109), dans lequel un ressort à lame (107) sollicitant la tige de traction (13) peut être soulevé, et déverrouillé pour sortir de la position d'engagement de l'arête vive (112).

12. Table de sciage selon l'une quelconque des revendications 1 à 11, caractérisée en ce que la scie (6) peut être inclinée à des positions angulaires de la lame de scie (7) et réglée en ce qui concerne sa profondeur de coupe, par exemple par le fait qu'une broche (134) est montée de manière articulée à distance d'un point de rotation (133) de la scie (6), broche sur laquelle un levier (130) portant la scie (6) est appuyé et peut être déplacé en vue d'un réglage grossier et fin de la profondeur de coupe, un bouton de réglage (137) pouvant à cet effet, d'une manière préférentielle, être vissé sur la broche (134), bouton sur lequel est fixé avec jeu de rotation un manchon (140) non déplaçable axialement, et un sabot (135), qui peut être serré fixement sur le manchon (140), pouvant être disposé avec jeu sur le levier

11

(130) de la scie (6).

13. Table de sciage selon la revendication 12, caractérisée en ce qu'un support de protection de scie (19) peut être fixé sur le cadre de table, support qui peut être incliné conformément à l'inclinaison de la scie (6) et qui peut être rabattu au-dessus de la scie (6) avec possibilité de réglage en hauteur dans le plan de la lame de scie (7), par exemple par le fait qu'il peut présenter deux équerres (160 ; 163) articulées l'une à l'autre, dont la première (160) peut être fixée par les côtés intérieurs de ses branches (161 ; 162) sur un élément profilé (2 ; 3) du cadre de table, tandis que la deuxième équerre (163) peut être fixée par une branche (164) à la première équerre (160) avec possibilité de rotation de relative et avec possibilité de blocage, et peut porter sur l'autre branche (169) un goujon (171) sur lequel est enfilé avec possibilité de coulissement un bras (173) maintenant la protection de scie (170).

14. Table de sciage selon la revendication 13, caractérisée en ce que, dans la branche (164) de la deuxième équerre (165) qui s'applique contre la première équerre (160), sont évidées une ou plusieurs fentes annulaires (167) associées à différents types de scies et s'étendant concentriquement à l'axe d'inclinaison du support de protection de scie (19), fentes dans lesquelles se déplace une vis à embase (168) qui peut être vissée sur la première équerre (160), à chaque fente annulaire (167) pouvant par exemple être associé un point de rotation propre pour le mouvement de pivotement du support de protection de scie (19), par exemple sous la forme d'un orifice de guidage (166) apte à recevoir un axe (165).

15. Table de sciage selon l'une quelconque des revendications 11 à 14, caractérisée en ce que la branche (169) de la deuxième équerre (163) qui porte le goujon (171) est munie d'un évidement pour recevoir un pilote (174), et le bras (173) porte un bout d'axe (175) autour duquel la protection de scie (170) peut être rabattue au-dessus de la lame de scie (7), la protection de scie (170) pouvant par exemple, après avoir desserré le pilote (174), être pivotée autour de l'axe du goujon (171) dans le plan de la lame de scie (7).

EP 0 115 277 B1

Fig. 1

*Fig. 2*

Fig.3

EP 0 115 277 B1

Fig. 4

Fig.5

Fig.6

4

Fig. 7

Fig. 8

Fig. 9

5

Fig. 10

Fig. 11

*Fig. 12*

*Fig. 13*

7

Fig. 14

Fig. 16

Fig. 15

XVI

EP 0 115 277 B1